# NEW EUROPEAN PATENT SPECIFICATION

(11) **EP 0 821 885 B2**
(45) Date of publication and mention of the opposition decision: **07.06.2006**
(45) Mention of the grant of the patent: 13.11.2002
(21) Application number: 96870099.7
(22) Date of filing: 31.07.1996
(51) Int. Cl.: A23L 1/308, A23L 1/0528, A23L 1/314, A23C 19/082, A23C 9/137, A23G 1/00, A23L 1/39, A23L 1/24, A23P 1/02

(54) **Fructan- and/or polydextrose-containing dairy powders, process for preparing same and their use**
Fruktan- und/oder Polydextrose enthaltende Milchproduktpulver; Verfahren zu ihrer Herstellung und Verwendung derselben
Poudres laitières contenant du fructane et/ou du polydextrose, procédé pour leur préparation et leur usage

(43) Date of publication of application: 04.02.1998
(73) Proprietor: "Raffinerie Tirlemontoise", société anonyme:, 1150 Bruxelles (BE)
(72) Inventor: Booten, Karl, 3450 Geetbets (BE); De Soete, Johan, 3360 Bierbeek (BE); Frippiat, Anne, 1933 Sterrebeek (BE)
(74) Representative: pronovem

(56) References cited:
- EP-A- 0 524 484
- EP-A- 0 657 106
- WO-A-91/13076
- WO-A-92/19112
- WO-A-96/01849
- DE-A- 19 500 919
- US-A- 5 238 698
- PATENT ABSTRACTS OF JAPAN vol. 016, no. 076 (C-0914), 25 February 1992 & JP-A-03 266937 (MEIJI MILK PROD CO LTD), 27 November 1991,

## Description

The present invention relates to fructan- and/or polydextrose-containing dairy powders.

It also relates to the use of these fructan- and/or polydextrose-containing dairy powders and to their preparation process.

A fructan-containing dairy powder is described In JP-A-03 266 937. It concerns a powdered milk preparation obtained by mixing 2-5% fructo-oligosaccharides in a commercial powdered milk preparation and used for reducing suckling's green faeces.

Indeed, fructo-oligosaccharides and more general fructans may have positive nutritional- and physiological effects in human and animal. Fructans are non-digestible low-calorie carbohydrates, they are not metabolized in the upper digestive track of higher animals and humans, they are fermented in the colon, as a result of which the bacterial flora in the large intestine may be influenced in human beings and animals. Fructans are therefore frequently used as "functional food ingredient". Besides, they may also be used as fat replacement because they provide a smooth fatty mouthfeel, as well as a well-balanced round flavour. In low fat food (light products), they are incorporated to improve the organoleptic properties, such as mouthfeel, taste and spreadability. However, in particular applications, such as fat continuous products, they may give a sticky mouthfeel.

Polydextrose is a low-calorie food additive typically used as a bulking agent to replace higher caloric food ingredients, such as sugars and fats, in food compositions. However, this additive may have a bad influence on the taste and texture of certain food compositions wherein it is used.

The European Patent Application EP-A-0524484 describes a granular concentrate of tea wherein inulin is used as a carrier for tea which are co-spray dried.

The main aim of the present invention is to provide a food ingredient that can be used in food compositions and which overcomes the afore mentioned drawbacks.

Another aim of the present invention is to provide food products comprising fructan- and/or polydextrose-containing dairy powders that have an excellent taste and texture, as well as, when containing fructans, beneficial properties, such as the promotion of the proliferation of beneficial intestinal bacteria (Bifidobacterium species in particular), the reduction of lipid and cholesterol levels in the body and dietary fibre-effects.

Another aim of the invention is to provide a process to prepare these fructan- and/or polydextrose-containing dairy powders.

Other aims and advantages will become apparent in the description that follows.

The present invention relates to a powder consisting of particles agglomerate consisting of a dairy and at least one ingredient selected from the group consisting of linear fructans, branched fructans, modified fructans and polydextrose.

The present invention relates also to a powder comprising the particles or agglomerates of the invention. The powder of the invention is differentiated from mere dry blends of the dairy and the one or more ingredients in that it contains in each particle the dairy and the one or more ingredients.

Surprisingly, the applicant has found that incorporating fructans and/or polydextrose in the dried dairy ingredient eliminates almost completely the sticky mouthfeel which one had when the fructans and/or polydextrose and the dairy ingredient are added as such to the fat continuous food products. Moreover, in the other type of food products the mouthfeel was also improved. For polydextrose, even the taste was improved. Further, the applicant has found that the powders of the invention are much easier to disperse into a suitable solvent than the mere dry blend of the dairy and the one or more ingredients. In addition, it has been observed that the foam stability was also Improved.

The particles or agglomerates of the invention contain from 1 to 99%, preferably from 5 to 95%, by weight on dry matter of at least one ingredient selected from the group consisting of linear fructans, branched fructans, modified fructans and polydextrose.

By "fructan" is meant any compound in which one or more fructosyl-fructose linkages constitute a majority of the linkages, see article "Glossary of fructan term" (A.L. Waterhouse et Al., Science and Technology of Fructans, 1993, p. 1-7).

By "linear fructan" is meant that the building units of the fructan molecules are almost free of branches.

By "branched fructan" is meant a fructan consisting of a main chain and one or more side chains. Branched fructans are described for instance in WO 91/13076.

By "modified fructan" is meant chemical modified fructan. One can have a chemical modification where the backbone of the polymer molecules are kept intact, for example etherified or estherified fructans. One can also have a chemical modification where the backbone molecules are modified, for example dicarboxy inulin. Modified fructans are described for instance in WO 96/01849 and EP A-0657106.

The fructans may be of the inulin type or of the levan type. Inulin is a material that has mostly or exclusively the β(2->1) fructosyl-fructose linkage; a glucose is allowed but is not necessary. Levan is a material that has mostly or exclusively the β(2->6) fructosyl-fructose linkage; a glucose is allowed but not necessary.

Inulin may be native (in plants) or may be produced by micro-organisms. Chemically speaking, inulin is a mixture of poly- and oligosaccharides that almost have the chemical structure GFₙ in which G=glucosyl unit, F=fructosyl unit and n=number of fructose molecules linked to one another and ranging normally from 3 to 60 for native inulin or ranging from 3 to 60,000 or more for native inulin from genetic modified plants and inulin produced by micro-organisms. Inulin may be extracted from chicory roots (Cichorium intybus), tubers of Dahlia (Duhlia variabiiis), jerusalem artichoke (Helianthus tuberosus), bottoms of artichoke (Cynara scolymus) and genetically modified plants. Inulin obtained by micro-organisms is, for instance produced from saccharose by Aspergillus sydowi conidia In the presence of L-cysteine or by means of frucosyltransferase of Streptococcus Mutans.

Another inulin type material suited to be used in the present invention is fructo-oligosaccharide. Fructooligosaccharides can be produced enzymatically from sugar obtaining products of the GFₙ type or can be produced hydrolytically from inulin obtaining a mixture of GFₙ and Fₘ types with n and m ranging here from 2 to 20.

Commercial products of the inulin type suited to be used in the present invention are for instance
- Raftiline ® of ORAFTI that is chicory inulin. There are several qualities, e.g. Raftiline ® GR, ST or ST-Gel that all three contain at least 90-94 % inulin on dry matter. Another quality is Raftiline ® LS that is chicory inulin from which the sugar molecules were removed. Still another quality is Raftiline ® HP that is a high performance inulin from which the smaller molecules were removed. See also the product sheets of these products dated 04/96 and distributed by ORAFTI;
- Raftilose ® of ORAFTI that contains mainly fructo-oligosaccharides produced by partial hydrolysis of chicory inulin. This product can be in the form of a syrup (qualities L30, L60, L85 and L95) or in the form of a powder (quality P95); see also the product sheets of these products dated 04/96 (for the syrups) or 05/96 (for the powder) and distributed by ORAFTI;
- Fibruline ® of COSUCRA which is chicory inulin; see also the product leaflet dated 9/90 and distributed by COSUCRA;
- Frutafit ® of SENSUS which is chicory inulin; and
- Actilightof BEGHIN-MEIJI INDUSTRIES which is a fructo-oligosaccharide. This fructo-oligosaccharide is produced enzymatically from beetsugar and consists mainly of GF₂, GF₃ and GF₄.

Although levan is found in grasses, industrially it is produced by micro-organisms. It may also be extracted from genetically modified plants.

Polydextrose is a randomly bonded condensation polymer of dextrose and polycarboxylic acids (e.g. citric acid). Generally, polydextrose comprises highly branched polymeric chains of dextrose wherein the linkage 1 to 6 predominates, and having a number average molecular weight between about 1,500 and 18,000. For instance polydextrose may be made by anhydrous melt polymerization using edible acids (e.g. mineral acids, carboxylic acids, polycarboxylic acids, citric acids) as catalysts and if desired, polyols (e.g. sorbitol) as chain terminating agents. There is a variety of polydextrose and these different polydextrose modifications can have different properties as food additives.

A polydextrose suited to be used in the present invention is Litesse ^{™}, a polydextrose commercialized by CULTOR FOOD SCIENCE.

Such as cocoa, coffee extract, sugars and sweeteners, starch and starch hydrolysates (e.g. maltose, maltodextrins, ...), flavour components (e.g. smoke, fruit, herbs, spices and vegetable), colouring agents, stabilizers, anti-foam agents, antioxidants, preserving agents, acids, salts, emulsifiers, anti-caking agents, fats and proteins.

Today, the range of dried dairy available on the market is enormous and it continuous to expand due to the development of processes to modify dairy product streams, the fractionation of milk into primary components and the better utilization of lower value dairy components. Therefore, according to the invention the dairy may be any dairy or dairy component that can be brought into the form of a powder, as such or by means of a drying agent, maltodextrin for instance. Advantageously, the dairy is whole, low fat or fat-free milk, buttermilk, whey, yoghurt, fermented milk, lactose, whey protein concentrates or isolates, caseinate, casein, cream, high fat concentrate or cheese.

The agglomerates are obtained in situ. The in situ agglomerates consist essentially of a core containing mainly either the dairy and optionally partly the at least one ingredient selected from the group consisting of linear fructans, branched fructans, modified fructans and polydextrose or the at least one ingredient and optionally partly the dairy, and of a coating containing mainly all the remaining of the at least one ingredient, respectively all or the remaining of the dairy.

The present invention concerns also aggregates consisting of the particles or agglomerates of the invention. It is common knowledge that in dairy industries the small particles or the particles in general are aggregated for instance to obtain an easily dissolvable product.

The present invention concerns also powders consisting of only the particles, agglomerates or aggregates of the invention as well as mixtures of the particles, agglomerates or aggregates with other powdered food components such as for example the food components enumerated above.

The present invention concerns also a process for the preparation of a powder according to the invention. According to the present invention, the process comprises preparing a liquid mixture of the dairy and the one or more ingredients, and drying the said mixture. Thus, both the dairy and the one or more ingredients are co-dried.

The liquid mixture of the dairy and the one or more ingredients may be prepared by any method known in the art to prepare liquid mixtures. For example, if both components are In powder form, the mixture may be prepared by mixing the components into a suitable solvent, e.g. water or by mixing first the dairy in a suitable solvent and then mixing the one or more ingredients in it. In general, the dairy will be in the liquid form and consequently, the one or more ingredients may directly be mixed Into it. It should be noted here, that accordingto the invention it is not necessary that the liquid mixture is a true solution, it may still be a suspension or an emulsion. Indeed, it may be possible if one wants to prepare a powder of which the particles contain for example a high percentage of fructans, that the quantity of these fructans will not dissolve completely. It suffices then that the suspension is thoroughly stirred in such a manner that the fructans are uniformly dispersed in the mixture just before to start the drying step. The fact that the fructans are not totally dissolved may even be beneficial for the preparation of the powder according to the invention since the part of the fructans that is not dissolved will be finely dispersed over the mixture and act as seeds that will promote the formation of agglomerates.

The liquid mixture comprising the dairy and the fructans and/or polydextrose is dried by co-spray-drying. It should be noted that by "drying the mixture comprising the dairy and the fructans and/or polydextrose" is meant all the process steps necessary in orderto transform a liquid (e.g. milk) into a marketable powder. Thus, it will for instance include pasteurization, evaporation to a high dry substance, proper drying and any modification step. Drying technology frequently used in the dairy manufacture comprises spray drying, roller drying, drum drying and freeze drying. However, in the process according to the invention co-spray-drying is used, since it is a relatively fast method and it works at lower drying temperature still giving a powder with excellent properties. Since spray-drying is well known in the dairy manufacture, the kind of nozzles, the nozzle pressure, the difference in inlet and outlet drying temperatures and so on will not be discussed here; see also the book "Spray Drying Handbook" (K. Masters, 5th Edition, 1991). It will be obvious for someone in the art that one has to adapt the drying parameters in function of the composition of the solution, suspension or emulsion to dry.

It is preferred that the process of the invention comprises also an aggregating step in order to obtain aggregates according to the invention. Aggregated particles, in general, are wetted and dispersed more rapidly than the fine original powder. This will be favourable for the further use of the powder according to the invention. Aggregating technology is also well known in the dairy manufacture.

Aggregating may be done, for instance by rewetting. This method uses dry powder as initial material. To increase the adhesive forces, the particles are moistened either by condensing vapour, atomized liquid, or a mixture of both. Depending on the process, aggregates are formed due to the collision and subsequent adhesion of the particles (fluid-bed technique, jet agglomeration), by balling (granulating disc, cone or drum), or by particle adhesion in bulk material which is allowed to rest (belt agglomeration).

It will be also possible to aggregate by freeze-drying, but this is a relatively expensive method.

It is advantageous to combine the aggregating step with the spray-drying step. The liquid fed to the spray dryer either in the form of a suspension, solution or emulsion, is finely distributed using a nozzle or a disc, dried and cooled in a connected fluidized bed from which the product is withdrawn in aggregated form. The fluidized bed is further intended to separate the fines that, after passing through a cyclone, are fed back into the spray-drier, preferably into the sprayed liquid. The fluidized bed may also be integrated in the drying chamber. This spray-drying technology, in general, yields loose, sufficiently large aggregates. However sometimes, it may be advantageous to aggregate a second time.

According to the present invention, it is also possible to prepare the agglomerates in situ in a spray dryer. To this end, one will have a liquid supply and a solid supply. The liquid supply may be either the dairy or at least one ingredient selected from the group consisting of linearfructans, branched fructans, modified fructans and polydextrose, or a liquid mixture of the dairy and partially the at least one ingredient or the at least one ingredient and partly the dairy. The solid supply will be then respectively the at least one ingredient selected from the group consisting of linear fructans, branched fructans, modified fructans and polydextrose, or the dairy, or the remaining of the at least one ingredient selected from the group consisting of linear fructans, branched fructans, modified fructans and polydextrose, or the remaining of the dairy. The liquid which can be in the form of a solution, a suspension or an emulsion is fed into the spray dryer where it is distributed by a nozzle or disk and at the same time the solid is blown or injected into the dryer. So the solid becomes wetted and the liquid causing agglomeration of the particles. Thus the solid is essentially coated with the liquid.

The particles, the agglomerates, the aggregates and the powders according to the invention are particularly suitable for use in the preparation of food, pet-food, feed, cosmetics and/or pharmaceuticals. Those kinds of product can be mixed with other Ingredients or can be used for the coating of said other food, feed, cosmetics or active ingredients of pharmaceutical compositions.

The powders according to the invention are particularly suitable for use in human food. Indeed, it was found that the powders of the invention have a greater functionality and improve the body and the mouthfeel as well as the taste in the case of polydextrose. Therefore, the powders of the invention can be used in foams and/or emulsions. Further the powders are suited to be used in table and butter spreads (oil-continuous or water continuous), cheeses (e.g. quark, cream, processed, soft and hard) and imitated cheeses, meat products (e.g. liver paste, frankfurter and salami sausages or meat spreads), chocolate spreads, fillings (e.g. truffle, cream, ...) and frostings, chocolate (dark, milk or white), confectionery (e.g. caramel, fondants ortoffee), dairy products (fermented milk, dairy drinks or desserts), frozen desserts (ice cream, sherbets, ...), baked goods (cakes, ...), sauces and soups, coffee whiteners and so on.

The following examples, without being limitative, are intended to illustrate the invention.

### Example 1

This example relates to a process according to the invention to prepare a powder according to the invention.

The dairy is a skimmed milk with about 9 % dry matter. The following ingredients were used :
a) Chicory inulin commercialised by ORAFTI under the trade name Raftiline ® ST containing 96 % dry substance;
b) Chicory inulin commercialised by ORAFTI under the trade name Raftiline ® HP containing also 96 % dry substance;
c) Polydextrose commercialized by CULTOR FOOD SCIENCE under the name Litesse^{™}.

The liquid mixture was obtained by pouring the inulin or the polydextrose into the milk under stirring. Heat was applied to dissolve entirely the inulin or polydextrose. The quantities of the components added to milk were such that the following solutions (in percentage on dry matter) were obtained :
1) 50/50 skimmed milk/Raftiline ® ST
2) 50/50 skimmed milk/Raftiline ® HP
3) 85/15 skimmed milk/Raftiline ® HP
4) 50/50 skimmed milk/Litesse^{™}

The solutions were then spray-dried. The inlet temperature of the air was about 180°C and the outlet temperature of the air about 80 °C.

The obtained powders according to the invention were analysed in order to determine their composition. The ratio skimmed milk/inulin or polydextrose that has been brought into solution, is maintained in the co-spray dried powders.

### Example 2

This example compares the powders according to the present invention with powders obtained by the mere blending of the different components in food applications.

The powders according to the invention are the powders obtained in example 1 and they will be enumerated in this example respectively 1, 2, 3 en 4. Four powders were also prepared by blending skimmed milk powder and Raftiline ® ST or HP or Litesse ^{™} in such a manner that the same ratios skimmed milk/inulin or polydextrose are obtained as in the powders according to the invention; these powders are enumerated 1', 2', 3' en 4'.

In some applications also a reference (the product without any added inulin or polydextrose) is used.

### Application 1 : White chocolate spread

| **Ingredients (in % (w/w))** | | **A** | **B** | **C** | **D** |
|---|---|---|---|---|---|
| | **Raftiline® ST** | 6 | 6 | | |
| | **Litesse**^{**™**} | | | 6 | 6 |
| | **Maltitol** | 23.05 | 23.05 | 23.05 | 23.05 |
| | **Powder 1** | 35.5 | | | |
| | **Powder 1'** | | 35.5 | | |
| | **Powder 4** | | | 35.5 | |
| | **Powder 4'** | | | | 35.5 |
| | **Krikol HI fat** | 34.1 | 34.1 | 34.1 | 34.1 |
| | **Vanilla** | 0.8 | 0.8 | 0.8 | 0.8 |
| | **Aspartame** | 0.05 | 0.05 | 0.05 | 0.05 |
| | **Lecithin** | 0.5 | 0.5 | 0.5 | 0.5 |

The ingredients, except for lecithin, are mixed in a Stephan mixer up to a 25 % fat level. The mass is then passed over a 3-roll refiner to obtain a fineness between 20-25 micron. Next, the remaining amount of the fat and the lecithin are added and the mass is mixed until homogeneous.

These fat continuous products were presented to a taste panel of 8 persons. The taste panel was asked to compare both products A & B and C & D; especially regarding stickiness in the mouth of the chocolate product. The taste panel distinguished significantly the product with the co-dried product, namely A, in comparison with B, it had almost no sticky mouthfeel anymore. A difference In taste between A and B was not mentioned. Product C had a better score regarding stickiness and taste as compared to product D.

### Application 2 : Quark

Firstly, there are prepared 2 "cremes" containing 30% of respectively powder 2 and 2'. To this end , the powder is added to water at 50 °C; next the dispersion is sheared with a Silverson high shearing unit during 10 minutes while maintaining the temperature at 50 °C. Then the "cremes" so obtained are cooled down to 35 °C. Two quark products were prepared by mixing thoroughly 90% quark and 10% of respectively the two prepared "cremes". The quark products were stored in the refrigerator for 24 hours. Then, the taste and the mouthfeel of both products as well as of a 100% quark, were evaluated. Concerning the taste, no difference could be distinguished among the three products. The quark products containing inulin had a better mouthfeel than the 100% quark and the product containing the spray-dried powder according to the invention had a much creamier mouthfeel than the product containing the blended powder.

### Application 3 : Chocolate mousse

| **Ingredients (in %)** | **A** | **B** | **C** | **D** |
|---|---|---|---|---|
| **Skimmed milk** | 65.5 | 65.5 | 65.5 | 65.5 |
| **Powder 2** | 5.0 | | | |
| **Powder 3** | 5.0 | | | |
| **Powder blended** | | 10.0 | | |
| **67.5% skimmed milk powder + 32.5% Raftiline ® HP** | | | | |
| **Powder 1** | | | 12.0 | |
| **Powder 1**' | | | | 12.0 |
| **Sugar** | 17.5 | 17.5 | 17.5 | 17.5 |
| **Cocoa powder** | 4.0 | 4.0 | 4.0 | 4.0 |
| **Stablliser Sherex IC9323** | 2.5 | 2.5 | 2.5 | 2.5 |
| **Gelatine SBI 80 Bis** | 0.5 | 0.5 | 0.5 | 0.5 |

Except for the stabilizer, all ingredients were added to the milk and mixed for 1 minute with a hand mixer. Next the mix is pasteurized for 30 seconds at 95 °C. After cooling down to 70 °C, the stabilizer is mixed in it. The mix is stored in the refrigerator for 24 h and then it is beaten up with a "Kitchen aid" during 15 minutes. The chocolate mousse is packed off and stored refrigerated for at least 24 hours before evaluation. The mousses containing the blended powders (B and D) had the less mouthfeel. The mousse containing the co-spray dried powder with Raftiline ® HP (A) had the most fatty mouthfeel and itwas much smoother. The mousse containing the co-spray dried powder with Raftiline ® ST (C) was rated with a better mouthfeel than the mousses containing the blended powders (B and D).

### Application 4 : Fat free table spread

| **Ingredients (in % (w/w))** | **A** | **B** | **C** | **D** |
|---|---|---|---|---|
| **Water** | 73.0 | 73.0 | 59.0 | 59.0 |
| **Powder 2** | 26.0 | | 40.0 | |
| **Powder 2'** | | 26.0 | | 40.0 |
| **Salt** | 0.65 | 0.65 | 0.65 | 0.65 |
| **Potassium sorbate** | 0.1 | 0.1 | 0.1 | 0.1 |
| **β-carotene** | 0.2 | 0.2 | 0.2 | 0.2 |
| **Cream flavour** | 0.05 | 0.05 | 0.05 | 0.05 |

All the ingredients are added to the water and then mixed for 1 minute with a hand mixer. Next, the mix is sheared with a Silverson high shearing unit for 10 minutes in a water bath at 60 °C. The mix is hot filled and then allowed to cool down to 10 °C (in a refrigerator). The spread is evaluated after hardening for 2 days at 10 °C. The spreads A and B had a too low gel strength and no difference in mouthfeel was distinguished between them. The spreads C and D had a right gel strength (230 g and 200 g respectively are measured at 10°C with a Stevens Texture Analyzer.) They were spreadable. The spread C had a smoother texture, more body and creamer mouthfeel than D.

It was observed in the applications 3 and 4, that the co-spray dried powders were much more dispersable in respectively milk and water, than the corresponding blended mixtures.

### Application 5 : Low fat (9% fat) spreadable processed cheese

| **Ingredients (in % (w/w))** | **A** | **B** |
|---|---|---|
| **Powder 2** | 0 | 12 |
| **Powder 2'** | 12 | 0 |
| **Water** | 46 | 46 |
| **Full-fat cheese (Young Cheddar)** | 20 | 20 |
| **Low-fat cheese (Samsö 30+)** | 15 | 15 |
| **Sodium caseinate (Naca)** | **4** | **4** |
| **Whey powder** | 2 | 2 |
| **Emulsifying salts (Joha S4 from BK Ladenburg)** | 1 | 1 |

The cheeses are grinded with a Stephan Universal Machine. All the other ingredients are then added into the Stephan. The mix is heated up to 80 °C while stirring at 1500 rpm under a partial vacuum (-0.7 bar). The hot product is packed and then allowed to cool down to 10 °C. The processed cheese is kept refrigerated and evaluated 2 days after the preparation.

The processed cheese made with the "co-dried" powder has a more spreadable texture and a significantly better mouthfeel than the product made with the "dry blend" powder. It is indeed less elastic and less sticky In the mouth. It shows also an improved melting profile in the mouth.

With the "co-dried" powder, the specific elasticity often associated with milk proteins has thus been reduced.

## Claims

1. Powder consisting of particles which consist of a dairy and at least one ingredient selected from the group consisting of linear fructans, branched fructans, modified fructans and polydextrose, which particles contain from 1 to 99 % by weight on dry matter of said at least one ingredient, and which have been obtained by co-spray-drying from a liquid mixture comprising said dairy and said ingredient.

2. Powder according to claim 1, which consists of particles containing from 5 to 95% by weight on dry matter of said at least one ingredient.

3. Powder according to claim 1 or 2, wherein the dairy is selected from the group of products consisting of whole milk, low fat milk, fat free milk, buttermilk, whey, yoghurt, fermented milk, lactose, whey protein concentrates, whey protein isolates, caseinate, casein, cream, high fat concentrate, and cheese.

4. Powder according to any one of claims 1 to 3, wherein the at least one ingredient is selected from the group consisting of linear fructans, branched fructans and modified fructans and wherein the fructans are of the inulin type.

5. Powder according to any one of claims 1 to 3, wherein the at least one ingredient is polydextrose.

6. Powder according to any one of claims-1 to 5, consisting of co-spray-dried particles, or of co-spray-dried particles which are in the form of agglomerates or aggregates.

7. Powder according to any one of claims 1 to 6, comprised in a powder consisting of a mixture of said powder as defined in any one of claims 1 to 6 and one or more other powdered food components.

8. Powder according to claim 7, wherein the other food components of said mixture are selected from the group consisting of cocoa, coffee extract, sugars, sweeteners, starch, starch hydrolysates, flavour components, colouring agents, stabilisers, anti-foam agents, antioxidants, preserving agents, acids, salts, emulsifiers, anti-caking agents, fats and proteins.

9. Process for the preparation of a powder defined in any of claims 1 to 6, comprising the following steps:
- preparing a liquid mixture comprising the dairy and at least one ingredient selected from the group consisting of linear fructans, branched fructans, modified fructans and/or polydextrose;
- drying said mixture by co-spray-drying,
- optionally further comprising an agglomerating and/or aggregating step.

10. Process according to claim 9, wherein the agglomerates or aggregates are formed in situ in a spray- dryer by an aggregating step which is combined with the co-spray-drying step.

11. Process for the preparation of a powder according to claim 7 or claim 8, wherein a co-spray-dried powder according to any one of claims 1 to 6 is mixed with other powdered food components.

12. Use of a powder defined in any one of claims 1 to 8, in the preparation of food, pet-food, feed, and/or pharmaceuticals.

13. Use according to claim 11 of a powder defined in any of claims 1 to 8, in the preparation of edible compositions, including foams, emulsions, table and butter spreads, cheeses and imitated cheeses, meat products, chocolate spreads, fillings and frostings, chocolate, confectionery, dairy products, frozen desserts, baked goods, sauces and soups, and coffee whiteners.

## Patentansprüche

1. Pulver, das aus Partikeln besteht, welche aus einem Milchprodukt und aus mindestens einem Ingredienz bestehen, das aus der Gruppe bestehend aus linearen Fruktanen, verzweigten Fruktanen, modifizierten Fruktanen und Polydextrose ausgewählt worden ist, welche von 1 bis 99 Gew.-% auf die trockene Substanz bezogen an dem besagten mindestens einem Ingredienz enthalten, und welche durch Trocknung und gemeinsame Zerstäubung ausgehend von einer flüssigen Mischung mit dem Milchprodukt und dem Ingredienz gewonnen worden sind.

2. Pulver gemäß Anspruch 1, das aus Partikeln besteht, die von 5 bis 95 Gew.-% auf die trockene Substanz bezogen an dem besagten mindestens einem Ingredienz enthält.

3. Pulver gemäß Anspruch 1 oder 2, wobei das Milchprodukt aus der Produktgruppe bestehend aus Vollmilch, fettarmer Milch, fettfreier Milch, Buttermilch, Molke, Joghurt, fermentierter Milch, Laktose, Molkeproteinkonzentraten, Molkeproteinisolaten, Kaseinat, Kasein, Sahne, hochkonzentriertem Fett und Käse ausgewählt worden ist.

4. Pulver gemäß irgendeinem der Ansprüche 1 bis 3, wobei das mindestens ein Ingredienz aus der Gruppe bestehend aus linearen Fruktanen, verzweigten Fruktanen und modifizierten Fruktanen ausgewählt worden ist, und wobei die Fruktane von dem Inulintyp sind.

5. Pulver gemäß irgendeinem der Ansprüche 1 bis 3, wobei das mindestens ein Ingredienz Polydextrose ist.

6. Pulver gemäß irgendeinem der Ansprüche 1 bis 5, das aus durch gemeinsame Zerstäubung getrockneten Partikeln oder aus durch gemeinsame Zerstäubung getrockneten Partikeln in der Form von Agglomeraten oder Aggregaten besteht.

7. Pulver gemäß irgendeinem der Ansprüche 1 bis 6, das ein Pulver bildet, das aus einer Mischung von dem besagten Pulver, so wie es in irgendeinem der Ansprüche 1 bis 6 definiert worden ist, und einer oder mehreren anderen Nahrungsmittelkomponenten in der Pulverform besteht.

8. Pulver gemäß Anspruch 7, wobei die anderen Nahrungsmittelkomponenten der besagten Mischung aus der Gruppe bestehend aus Kakao, Kaffeeextrakt, Zucker, Süßstoffe, Stärke, Stärkehydrolysate, Geschmackskomponenten, Farbzusätze, Stabilisatoren, Antischaumzusätze, Antioxidantien, Konservierungsmittel, Säuren, Salze, Emulgatoren, Antiklumpmittel, Fette und Proteine ausgewählt worden sind.

9. Verfahren für die Herstellung eines Pulvers, so wie es in irgendeinem der Ansprüche 1 bis 6 definiert worden ist, das die folgenden Schritte umfasst:
- Zubereitung einer flüssigen Mischung, die das Milchprodukt und mindestens ein Ingredienz enthält, das aus der Gruppe bestehend aus linearen Fruktanen, verzweigten Fruktanen, modifizierten Fruktanen und/oder Polydextrose ausgewählt worden ist;
- Trocknen der besagten Mischung durch Trocknen über gemeinsames Zerstäuben;
- wahlweise einen Agglomerations- und/oder Aggregationsschritt.

10. Verfahren gemäß Anspruch 9, wobei die Agglomerate oder Aggregate in situ in einem Zerstäubungstrockner durch einen Aggregationsschritt gebildet werden, welcher mit dem Schritt des Trocknens über gemeinsames Zerstäuben kombiniert ist.

11. Verfahren für die Herstellung eines Pulvers gemäß Anspruch 7 oder Anspruch 8, wobei ein durch gemeinsame Zerstäubung getrocknetes Pulver gemäß irgendeinem der Ansprüche 1 bis 6 mit anderen Nahrungsmittelkomponenten in der Pulverform gemischt werden.

12. Verwendung eines Pulvers, wie es in irgendeinem der Ansprüche 1 bis 8 definiert worden ist, bei der Herstellung von Nahrungsmitteln, von Nahrungsmitteln für Haustiere, von Futter und/oder von Pharmazeutika.

13. Verwendung gemäß Anspruch 11 eines Pulvers, wie es in irgendeinem der Ansprüche 1 bis 8 definiert worden ist, bei der Herstellung von Zusammensetzungen von Nahrungsmitteln, einschließlich von Schäumen, Emulsionen, Tisch- und Butteraufstrichen, von Käsen und von nachgeahmten Käsen, von Fleischprodukten, Schokoladenaufstrichen, Füllungen und Zuckergüssen, Schokolade, Süßigkeiten, Milch- bzw. Molkereiprodukten, gefrorenen Nachspeisen, gebackenen Waren, Saucen und Suppen, und Kaffeeweißer.

## Revendications

1. Poudre constituée de particules qui sont constituées d'un ingrédient laitier et d'au moins un ingrédient choisi dans le groupe constitué des fructanes linéaires, des fructanes ramifiés, des fructanes modifiés et du polydextrose, dont les particules contiennent 1 à 99% en poids par rapport à la matière sèche dudit au moins un ingrédient, et qui ont été obtenues par co-séchage par pulvérisation à partir d'un mélange liquide comprenant ledit ingrédient laitier et ledit ingrédient.

2. Poudre selon la revendication 1, qui est constituée de particules contenant 5 à 95% en poids par rapport à la matière sèche dudit au moins un ingrédient.

3. Poudre selon la revendication 1 ou 2, dans laquelle l'ingrédient laitier est choisi dans le groupe de produits constitué de lait entier, de lait à faible teneur en matières grasses, de lait sans matières grasses, de babeurre, de petit-lait, de yaourt, de lait fermenté, de lactose, de concentrés de protéines de petit-lait, d'isolats de protéines de petit-lait, de caséinate, de caséine, de crème, de concentré à haute teneur en matières grasses, et de fromage.

4. Poudre selon l'une quelconque des revendications 1 à 3, dans laquelle au moins un ingrédient est choisi dans le groupe constitué des fructanes linéaires, des fructanes ramifiés et des fructanes modifiés et dans laquelle les fructanes sont du type inuline.

5. Poudre selon l'une quelconque des revendications 1 à 3, dans laquelle au moins un ingrédient est le polydextrose.

6. Poudre selon l'une quelconque des revendications 1 à 5, constituée de particules co-séchées par pulvérisation, ou de particules co-séchées par pulvérisation qui se présentent sous forme d'agglomérats ou d'agrégats.

7. Poudre selon l'une quelconque des revendications 1 à 6, comprise dans une poudre constituée d'un mélange de ladite poudre telle que définie dans l'une quelconque des revendications 1 à 6 et d'un ou plusieurs autres composants alimentaires en poudre.

8. Poudre selon la revendication 7, dans laquelle les autres composants alimentaires dudit mélange sont choisis dans le groupe constitué de cacao, d'extrait de café, de sucres, d'édulcorants, d'amidon, d'hydrolysats d'amidon, de composants de saveur, d'agents colorants, de stabilisateurs, d'agents anti-mousse, d'antioxydants, d'agents conservateurs, d'acides, de sels, d'émulsionnants, d'agents anti-agglomération, de matières grasses et de protéines.

9. Procédé de préparation d'une poudre telle que définie dans l'une quelconque des revendications 1 à 6, comprenant les étapes suivantes :
- préparation d'un mélange liquide comprenant l'ingrédient laitier et au moins un ingrédient choisi dans le groupe constitué des fructanes linéaires, des fructanes ramifiés, des fructanes modifiés et/ou du polydextrose;
- séchage dudit mélange par co-séchage par pulvérisation;
- facultativement comprenant en outre une étape d'agglomération et/ou d'agrégation.

10. Procédé selon la revendication 9, dans lequel les agglomérats ou les agrégats sont formés in situ dans un séchoir par pulvérisation lors d'une étape d'agrégation qui est combinée à l'étape de co-séchage par pulvérisation.

11. Procédé de préparation d'une poudre selon la revendication 7 ou 8, dans lequel une poudre co-séchée par pulvérisation selon l'une quelconque des revendications 1 à 6 est mélangée avec d'autres composants alimentaires en poudre.

12. Utilisation d'une poudre telle que définie dans l'une quelconque des revendications 1 à 8, pour la préparation d'aliments, d'aliments pour animaux domestiques, de fourrage, et/ou de produits pharmaceutiques.

13. Utilisation selon la revendication 11 d'une poudre telle que définie dans l'une quelconque des revendications 1 à 8, pour la préparation de compositions comestibles, notamment des mousses, des émulsions, des pâtes à tartiner de table et à base de beurre, des fromages et imitations de fromages, des produits carnés, des pâtes à tartiner chocolatées, des garnitures et des glaçages, du chocolat, de la confiserie, des produits laitiers, des desserts surgelés, des aliments cuits, des sauces et soupes, et des succédanés de lait pour le café.
